# EUROPÄISCHE PATENTSCHRIFT

(11) **EP 0 909 140 B1**
(45) Veröffentlichungstag und Bekanntmachung des Hinweises auf die Patenterteilung: **10.10.2001**
(21) Anmeldenummer: 97934448.8
(22) Anmeldetag: 04.07.1997
(51) Int. Cl.: A47K 11/02, A61L 11/00

(54) **VORRICHTUNG ZUR AUFBEREITUNG VON GEGEBENENFALLS AUCH KONTAMINIERTEN IN SANITÄRANLAGEN ANFALLENDEN SCHLÄMMEN**
DEVICE FOR TREATMENT OF POSSIBLY CONTAMINATED SLUDGE OCCURRING IN SANITARY FACILITIES
DISPOSITIF POUR LE TRAITEMENT DE BOUES EVENTUELLEMENT CONTAMINEES SE PRESENTANT DANS DES INSTALLATIONS SANITAIRES

(30) Priorität: 04.07.1996 DE 29611544 U
(43) Veröffentlichungstag der Anmeldung: 21.04.1999
(73) Patentinhaber: HAK-Anlagenbau GmbH, 22393 Hamburg (DE)
(72) Erfinder: KRAUSE, Heinz, D-22393 Hamburg (DE)
(86) Internationale Anmeldenummer: EP9703548
(87) Internationale Veröffentlichungsnummer: WO9801065

(56) Entgegenhaltungen:
- DE-A- 4 010 492
- DE-A- 4 102 760
- DE-A- 4 307 102

## Beschreibung

Die Erfindung betrifft eine Vorrichtung zur Aufbereitung von ggf. auch kontaminierten in Sanitäranlagen am Ablauf von Toilettenbecken anfallenden Schlämmen, bei der die Feststoffe mittels eines Filters aufgefangen und in einer Reduzierungskammer mit Einrichtungen zur Erzeugung elektromagnetischer Wellen durch diese aufbereitet werden und die verbleibende Flüssigkeit desinfiziert wird.

Bei mobilen Toilettenanlagen z.B. in Schienen- und Luftfahrtzeugen und Schiffen besteht das Problem, daß die Toilettenabfälle relativ großvolumige Sammelbehälter erfordern, wobei zur Dekontaminierung umfangreiche chemische Mittel eingesetzt werden müssen.

Nach der DE-A-41 02 760 ist zur Beseitigung dieser Nachteile eine Vorrichtung vorgeschlagen worden, die als Verbrennungstoilette für Schienenfahrzeuge ausgebildet ist. Bei dieser werden die Fäkalien (feste Bestandteile) nach vorheriger Trennung der festen von den flüssigen Bestandteilen verbrannt. Hierzu ist eine für elektromagnetische Wellen und Flüssigkeit durchlässige Reduzierungskammer (Brennkammerbehälter aus einem porösen temperaturbeständigen und für Infrarotstrahlen und Mikrowellen durchlässigen Material) vorgesehen. Die Verbrennungsgase werden vor dem Austritt ins Freie in einer Nachverbrennungseinrichtung nachverbrannt. Bei dieser Verbrennungstoilette besteht der Nachteil, daß die Verbrennungsgase nachverbrannt werden müssen. Außerdem besteht die Gefahr, daß in der Asche in dem Brennkammerbehälter nicht alle festen Bestandteile verbrannt werden oder nachglühende feste Bestandteile verbleiben, da die Entfernung der Asche nur nach manueller Öffnung des Brennkammerbehälters möglich ist. Dieses kann aber nicht während des Fahrbetriebs von Schienenfahrzeugen erfolgen.

Die Aufgabe der Erfindung besteht darin, eine Vorrichtung der eingangs genannten Art so auszubilden, daß die in der Reduzierungskammer nach jedem Reduzierungsprozeß angefallene Asche ohne manuellen Eingriff von außen aus der Reduzierungskammer entfernt wird, und daß eine Nachverbrennungseinrichtung für Verbrennungsgase nicht erforderlich ist.

Erfindungsgemäß erfolgt die Lösung der Aufgabe durch die Merkmale des Anspruchs 1. Vorteilhafte Ausgestaltungen der Erfindung werden in den abhängigen Ansprüchen beschrieben.

Nach der Erfindung werden die anfallenden Flüssigkeiten und Feststoffe zunächst grob getrennt. Dies geschieht durch einen als Schieber ausgebildeten siebartigen Boden. Die auf dem Sieb verbliebenen Feststoffe werden dann gemeinsam mit dem Boden in eine Reduzierungskammer geschoben und dort elektromagnetischen Wellen ausgesetzt. Der gereinigte Boden schiebt sich sodann sofort wieder in die Betriebszone, wobei auf dem Boden liegende Feststoffe abgeschoben werden. Im gleichen Bewegungsablauf wird der bewegliche Boden mit einem Druckwasserstrahl gereinigt. Die hierfür erforderliche Spülflüssigkeitsmenge ist äußerst gering und beträgt nicht mehr als 50 mml. Um das Servicewassergewicht zu reduzieren, wird das Reinigungswasser separat entkeimt und dem Reinigungsprozeß wieder zugeführt. Da die erforderlichen Serviceintervalle und der erforderliche Energiebedarf durch das erfindungsgemäße Prinzip sehr klein gehalten werden, sind große Energie- und Gewichtsreduzierungen bei gleichzeitiger hoher Benutzerfrequenz möglich. In der eigentlichen als Prozeßkammer dienenden Reduzierungskammer findet der Reduzierungsprozeß statt. Da der Trocknungsprozeß in mehreren fließend verlaufenden Prozeßabläufen von Trocknung, Verkokung bis zur vollständigen Fraktion im Plasma erfolgt, verbleibt nach vollständigem Prozeßablauf nur ein kleiner Aschrest. Bei dieser Reduktionsweise ist es möglich, nur geringe Energien zur Erreichung der angestrebten Aufbereitung zu benutzen. Die Trocknung und Verkokung mit elektromagnetischen Wellen umgehen mögliche Wärmeleitwiderstandsprobleme, die aus den Eigenschaften des zu bearbeitenden Stoffes denkbar sind. Der Arbeitsprozeß im Plasmazustand hat den Vorteil, die Bereiche der größten Erwärmung kugelförmig einzuhüllen und ungewollte Verletzungen der Wandungen können auf diese Weise vermieden werden, so daß bei höchsten Temperaturen nur geringste Wärmeübertragung nach außen erfolgt.

Da der Trocknungs- bzw. Verkokungsprozeß von innen nach außen verläuft, wird eine Verkrustung der Oberflächen der Feststoffe und ein damit ansteigender Wärmeleitwiderstand verhindert. Die Oberflächen der Feststoffe bleiben offenporig, so daß eine zügige und ungehinderte Trocknung von innen nach außen erfolgt, wobei der erforderliche Energieaufwand wegen des geringen Wärmeleitwiderstandes minimiert wird. Entstehende Dämpfe werden abgesaugt und können bei Bedarf kondensiert werden. Der Trocknungs- bzw. Verkokungsprozeß kann zusätzlich dadurch beschleunigt werden, daß an die Reduzierungskammer ein Vakuum angelegt wird. Die Toilettenschüssel ist selbstreinigend ausgebildet durch ein Spülflüssigkeitssystem, wozu eine Umwälzpumpe, Reinigungsdüsen und Filter für die Spülflüssigkeit zu deren Entkeimung vorgesehen sind. Die Filter können als Aktivkohlefilter, Zeolithe, Osmose oder als Membran ausgebildet sein. Für die Fest/Flüssig-Trennung ist ein Siebboden vorgesehen. Es können aber auch Siebbodenelemente und/oder eine Siebrinne und/oder eine Rinne und/oder eine Kombination der vorgenannten Bauteile vorgesehen werden. Der Urinalsammeltank weist einen Fest/Flüssigfilter oder einen Feststoffilter mit Aktivkohle oder Zeolithe auf. Für die Flüssigkeiten ist eine Schleuse in Form einer Flüssig-Membran mit Geruchsverschluß vorgesehen.

Vorzugsweise werden die Feststoffe schon in der Toilettenschüssel von dem Urin getrennt und danach direkt in die Reduzierungskammer eingegeben. Nach der thermischen Zersetzung in einem Plasma erfolgt die gesteigerte Eindüsung des Urins in das aufgebaute Plasma und den Abgasstrom. Hierbei erfolgt die Zersetzung des Urins bei gleichzeitiger Desinfektion. Die Abgase des Plasmaprozesses werden hierbei gleichzeitig gekühlt.

Das Schleusensystem für den Abfall kann aus einem Schiebersystem bestehen, das als Doppelschiebersystem, Rotationsschiebersystem oder Zellenradschleuse ausgebildet sein kann. Ferner kann ein Schneckenförderer vorgesehen sein, der als Verdichterschnecke, Trogschnecke, Zerkleinerungsschnecke oder Entwässerungsschnecke ausgebildet sein kann. Ferner ist es möglich, einen Kolben vorzusehen, der als Einzelkolben, Doppelkolben, Drehkolben oder Dosierkolben ausgebildet ist. Für die Flüssigphase der Fäkalien ist als Schleuse eine Flüssigmembran vorgesehen, die als Geruchsverschluß fungiert. Gleichzeitig wird diese Membranflüssigkeit zum Spülen der Toilettenschüssel eingesetzt. Hierbei sind keine weiteren mechanischen Abtrennungen erforderlich und der Spülwasserbedarf kann gegen nahezu Null Liter gesenkt werden. Als Membranmedium ist ein geeignetes Fluid zu verwenden, wobei dieses Fluid so sein soll, daß dessen spezifisches Gewicht unter dem Abwassermedium liegt und sich nicht mit Urin oder Flüssigkeiten vermischen läßt. Es ist auch möglich, einen Membranschieber vorzusehen, der vorzugsweise als Faltenbalg ausgebildet ist. Es kann auch ein Quetschventil oder aber eine Rollenschlauchpumpe verwendet werden, die das Toilettenbecken und den Förderationsraum der Reduzierungskammer voneinander trennt. Der Grobtrennraum bildet einen Vorratsraum für den Abfall für Fest- und Flüssigstoffe zur Pufferung von Belastungsspitzen.

Der Reduzierungsraum ist von einem geschirmten Gehäuse umgeben, durch das er für elektromagnetische Wellen undurchlässig ist. Es ist ein Feuerfesteinsatz mit Frequenzmodulator und dazugehörigem Sender für elektromagnetische Resonanzfrequenz-Wellen vorhanden, die auf die erforderliche Resonanzfrequenz der zu reduzierenden Stoffe abgestimmt sind. Der Sender kann mit oder ohne Monolinearfilterfenster ausgebildet sein. Die Monollnearfllterfenster-Geometrie ist fokussierend ausgestaltet. Ebenso ist die Reduzierungsraumgeometrie fokussierend/reflektierend ausgestaltet. Das Abgassystem besteht aus einer an die Reduzierungskammer angeschlossenen Abgasleitung mit einem Katalysator oder einem Abgasfilter, wie Aktivkohle, Zeolithe o.dgl.. Ferner ist eine Abgasspülung vorgesehen, wozu eine Hochdruckpumpe, ein Atomiser, ein Flüssigkeitsüberlauf, ein Flüssigfilter wie Aktivkohle, Zeolithe o.dgl., und ein Sammeltank für Servicewasser vorgesehen ist. Der Fest/Flüssigfilter ist als Feststoffilter ausgebildet und kann aus Aktivkohle oder Zeolithe bestehen. Die Reduzierungsraumgeometrie ist fokussierend, so z.B. kreisrund, tonnenförmig oder oval tonnenförmig. Die verwendeten Materialien sind so, daß sie teilreflektierend (verlustbehaftet) oder reflektierend ausgewählt sind. Die Abgaskühlung erfolgt so, daß wenn der Reduzierungsprozeß gesteuert ist, keine Verkokung im ersten Lauf angestrebt wird, es kann die gewonnene Flüssigkeit zur Entkeimung des anfallenden Urins oder zur Abgasreinigung verwendet werden.

Zur Sammlung der Asche ist ein starr oder beweglich ausgebildeter Siebboden vorgesehen. Ferner können Aschebehälter aus Metall, mit/ohne Kunststoffeinsatz, Papiertüten, Entleerungsstutzen für Staubsauger, Ascheladen, Luft,-/Wasserejektor-Anschlüsse zum Einsatz kommen. Das Flüssigkeitssystem besteht aus einem Originalsammler mit einem Atomiser zur Urinalmengenregulierung und Abgaskühlung mittels einer Pumpe, Düsen zum Bereinigen der Toilettenschüssel, Düsen für die Reinigung der Abfallschleusensysteme sowie eines Überlaufs.

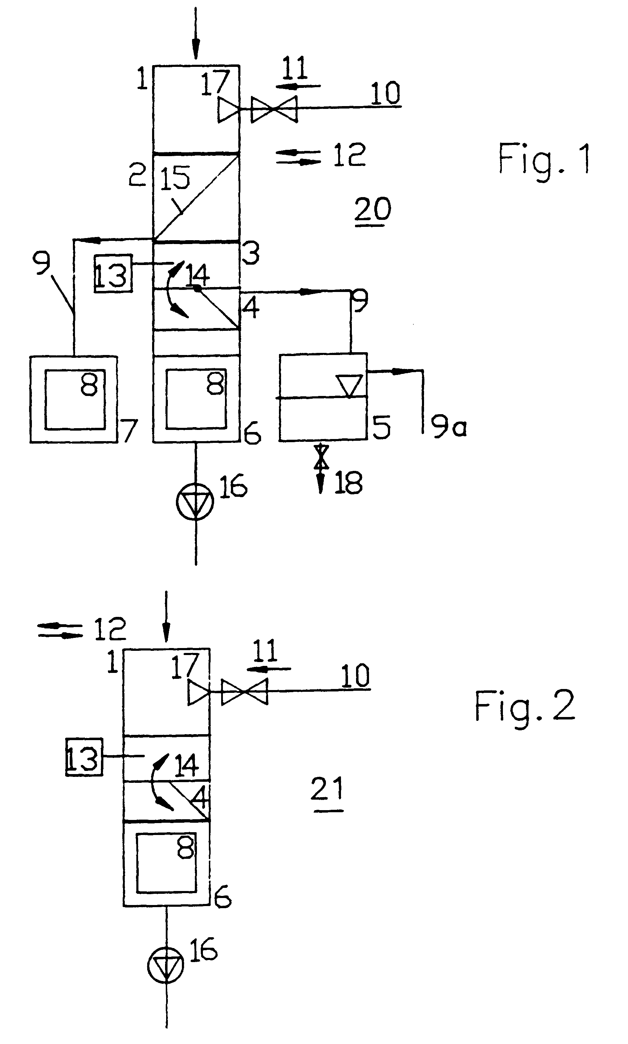

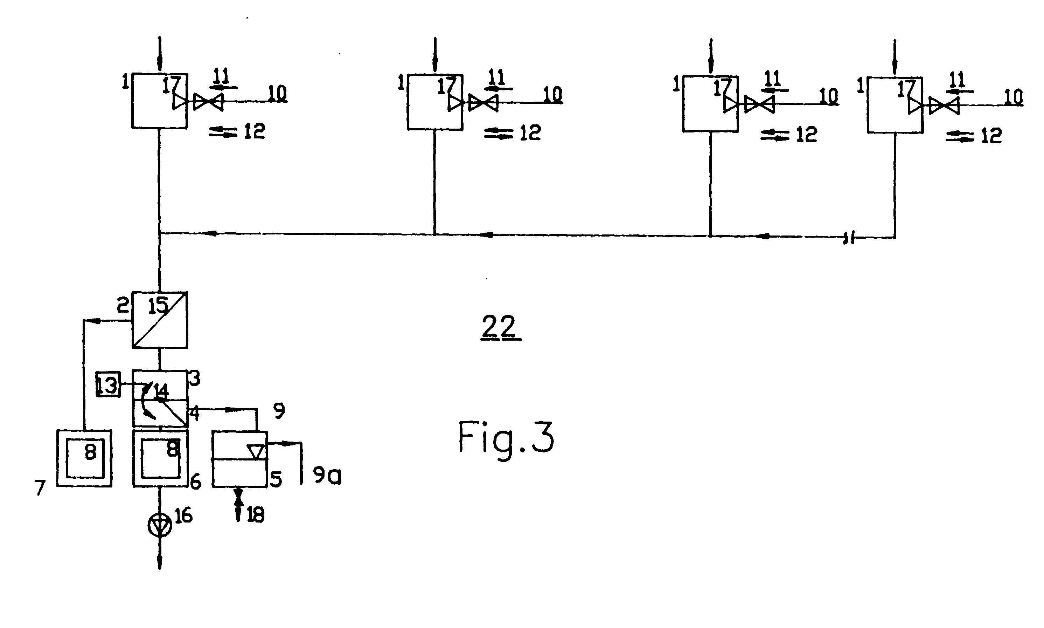

Die Erfindung wird nachstehend anhand der in den Zeichnungen dargestellten erfindungsgemäßen Vorrichtungen näher erläutert. Fig. 1 bis 16 zeigen verschiedene Anordnungen von Toilettenanlagen in schematischen Darstellungen, wobei übereinstimmende Bauelemente jeweils mit gleichen Bezugszeichen versehen sind.

Fig. 1 zeigt eine Toilettenanlage 20. An das Toilettenbecken 1 ist eine Reinigungsdüse 17 angeschlossen, die mit einer Druckwasserleitung 10 verbunden ist, in der ein Druckwasserventil 11 angeordnet ist. Am Boden des Toilettenbeckens 1 ist ein Grobtrennraum 2 angeordnet. In dem Grobtrennraum 2 ist ein Grobsieb 15 angeordnet, das größere Grobteile wie Glasflaschen, Dosen u.dgl. abtrennt und über eine Überlaufleitung 9b in einen Sammelraum 7 führt. Der Boden des Grobtrennraums 2 ist als siebartiger Schieber 12 ausgebildet. Auf dem Schieber 12 nach der Grobtrennung verbleibendes Fäkalgut gelangt durch Zurückziehen des Schiebers 12 in die Reduzierungskammer 3. Der Schieber 12 wird danach wieder in die Betriebszone am Boden des Grobtrennraums 2 geschoben, wobei gleichzeitig eine Reinigung des Schiebers 12 durch einen Druckwasserstrahl erfolgt. Die Reduzierungskammer 3 ist als Energieraum ausgebildet und weist einen Sender 13 auf, mittels dem das in der Reduzierungskammer 3 befindliche Fäkalgut mit elektromagnetischen Wellen beaufschlagt wird. In der Reduzierungskammer 3 ist eine Entleerungsklappe 14 angeordnet. Flüssige Bestandteile des Fäkalguts werden in einem Flüssigkeitssammler 4 in der Reduzierungskammer 3 gesammelt und über eine Überlaufleitung 9 in einen Flüssigkeitssammelbehälter 5 geleitet. An dem Flüssigkeitssammelbehälter 5 ist eine Überlaufleitung 9a angeschlossen. Ferner weist der Flüssigkeitssammelbehälter 5 eine Entleerungsleitung 18 auf. Nach Behandlung der Trockensubstanz mit elektromagnetischen Wellen wird die Entleerungsklappe 14 geschwenkt, und die Trockensubstanz gelangt in einen Sammelbehälter 6. In diesem ist ein Papiertütenspender 8 angeordnet, der zur Ausgabe von Papiertüten zur Aufnahme von Trockensubstanz dient. Mittels einer Vakuumpumpe 16 werden die mit Trockensubstanz gefüllten Papiertüten abgeführt.

Die in Fig. 2 dargestellte Toilettenanlage 21 entspricht der Toilettenanlage 20, weist allerdings keinen Sammelraum 7 für Glas, Dosen u.dgl. sowie keinen Sammelraum für Flüssiggut auf.

In Fig. 3 ist eine Toilettenanlage 22 dargestellt, die vier Toilettenbecken 1 aufweist. Diese werden über eine gemeinsame Sammelentleerungsleitung 19 dem Grobtrennraum 2 zugeführt, an den sich weitere Anlagenelemente wie bei der Toilettenanlage 20 anschließen.

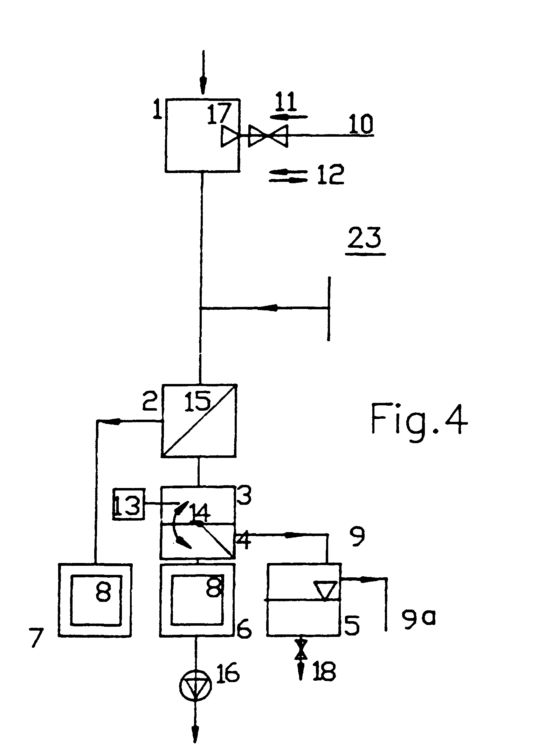

Bei der in Fig. 4 dargestellten Toilettenanlage 23 ist gegenüber der Toilettenanlage 20 das Toilettenbecken 1 im räumlichen Abstand zu den weiteren Aufbereitungselementen angeordnet.

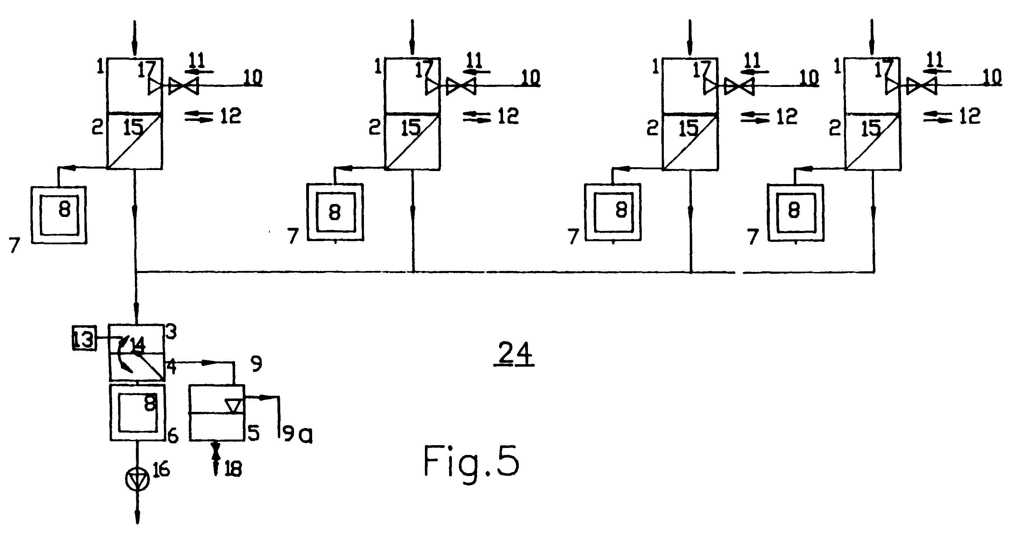

Fig. 5 zeigt eine Toilettenanlage 24, bei der vier Toiletten 1 mit jeweils einem Grobtrennraum 2 und einem Sammelraum 7 für Glas, Dosen u.dgl. über eine Sammelentleerungsleitung 19 mit der eigentlichen Fäkalstoffaufbereitungseinrichtung verbunden sind, wie sie zu Fig. 1 beschrieben wurde.

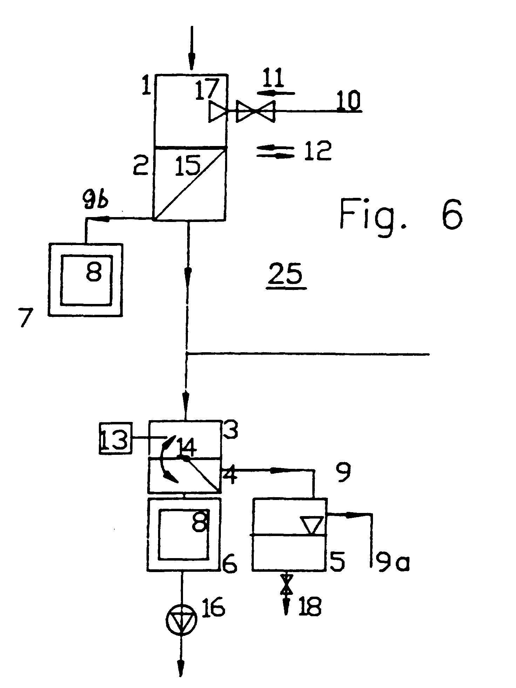

Fig. 6 zeigt eine Toilettenanlage 25, mit einem Toilettenbecken 1, bei der wie bei der Toilettenanlage 24 dem Toilettenbecken 1 ein Grobtrennraum 2 und ein Sammelraum 7 für Glas, Dosen u.dgl. zugeordnet ist, während sich die Fäkalstoffaufbereitungseinrichtung im Abstand befindet. Diese ist wie zu Fig. 1 erläutert ausgebildet.

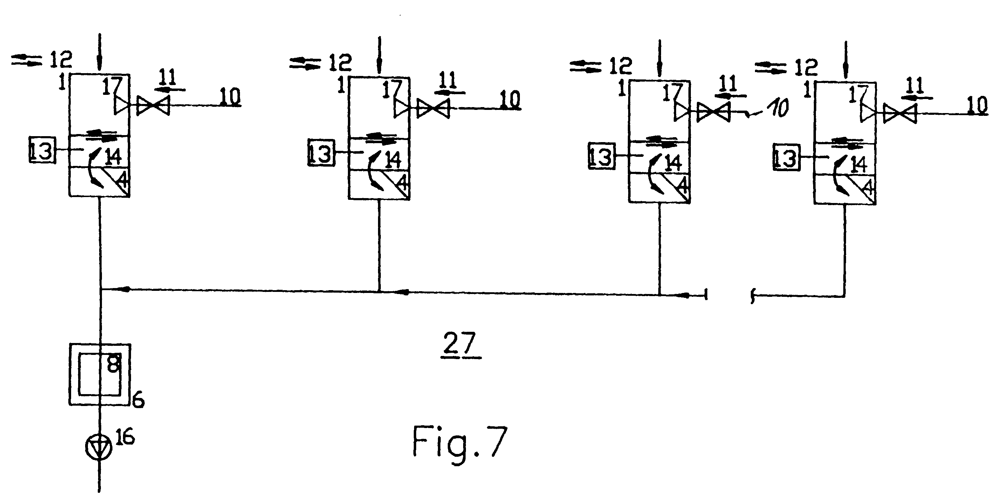

Fig. 7 zeigt eine Toilettenanlage 26, bei der jedem Toilettenbecken 1 eine Fäkalstoffaufbereitungseinrichtung zugeordnet ist. Die aufzubereitenden Trockensubstanzen werden über Sammelentleerungsleitungen 19 einem gemeinsamen Sammelbehälter 6 für Trockensubstanz zugeführt. An diesen ist eine Vakuumpumpe 16 angeschlossen. Grobtrennräume 2 und Sammelräume 7 für Glas, Dosen u.dgl. sind nicht vorgesehen.

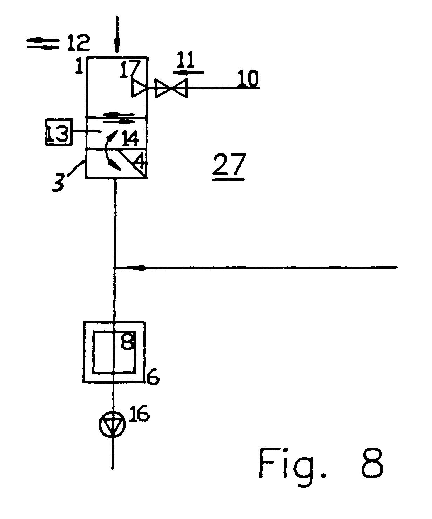

Fig. 8 zeigt eine Toilettenanlage 27, bei der gegenüber der Toilettenanlage 26 nach Fig. 7 nur ein Toilettenbecken 1 vorgesehen ist.

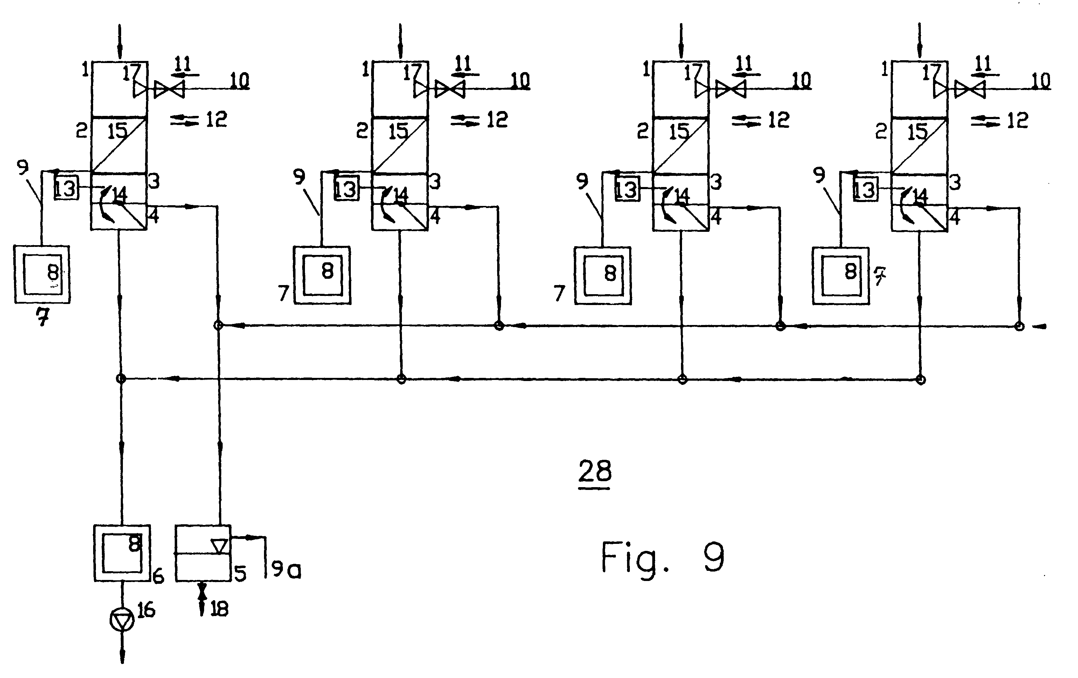

In Fig. 9 ist eine Toilettenanlage 28 dargestellt, bei der jedem der vier Toilettenbecken 1 ein Grobtrennraum 2, eine Reduzierungskammer 3 und ein Sammelraum 7 für Glas, Dosen o.dgl. zugeordnet ist. Anfallende Trockensubstanzen und Flüssigkeiten werden über eine Sammelentleerungsleitung 19 bzw. über Überlaufleitungen 9 in einem Sammelbehälter 6 für Trockensubstanz bzw. in einem Flüssigkeitssammelbehälter 5 gesammelt.

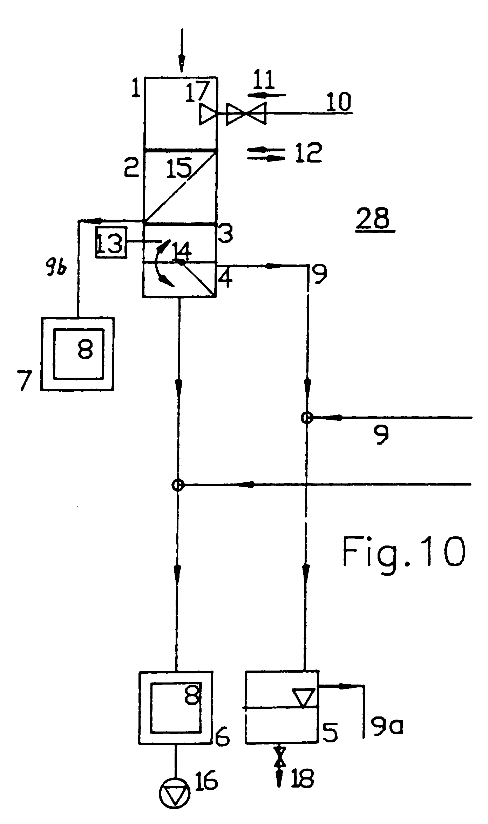

Fig. 10 zeigt in einer vergrößerten Darstellung einen Ausschnitt aus der Toilettenanlage 28.

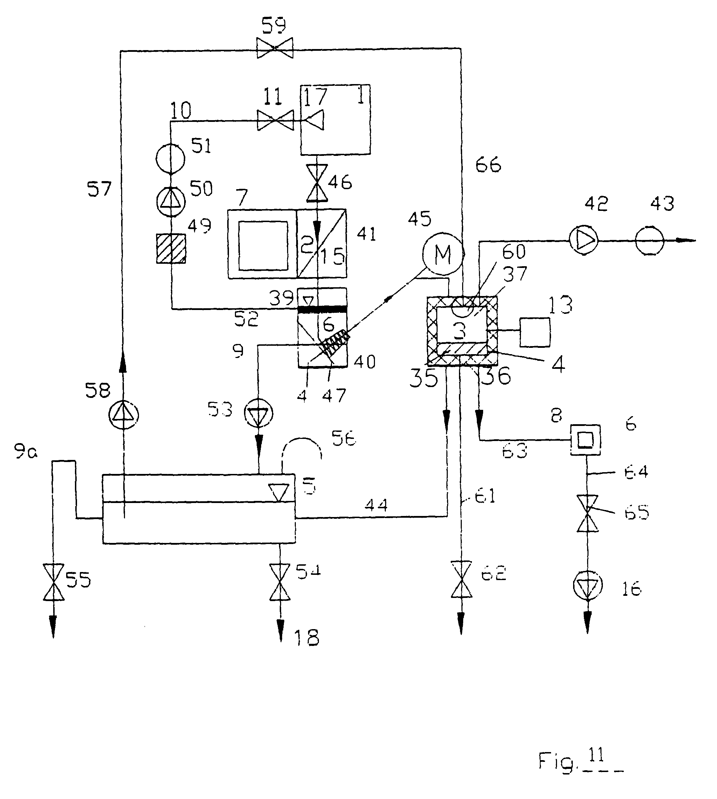

Fig. 11 zeigt eine Toilettenanlage 29. In dem Verbindungsrohr zwischen dem Toilettenbecken 1 und dem Grobtrennraum 2 ist ein Ventil 46 angeordnet. Dem Grobtrennraum 2 ist eine Grobtrennkammer 47 zur Trennung des Fäkalgutes in Flüssigkeit und Feststoffen angeordnet, wobei die Feststoffe nach der Trennung noch eine Restfeuchtigkeit aufweisen können. Im oberen Bereich der Grobtrennkammer 47 ist ein Membranschieber 39 vorgesehen, der als Faltenbalg ausgebildet sein kann. Im Bereich des Membranschiebers 39 ist an die Grobtrennkammer 47 eine Rohrleitung 48 als Druckwasserleitung 10 angeschlossen, die mit der Reinigungsdüse 17 in Verbindung steht. In der Rohrleitung 48 ist ein Desinfektor 49, eine Pumpe 50, ein Filter 51 und ein Druckwasserventil 11 angeordnet. Der Desinfektor 49 kann mittels elektromagnetischer Wellen chemisch oder elektrochemisch betrieben werden. Im unteren Bereich der Grobtrennkammer 47 ist durch einen schräg angeordneten Filter 52 ein Flüssigkeitssammler 4 ausgebildet. Der Filter 52 kann z.B. ein Siebboden, eine Anordnung von Siebbodensegmenten, eine Siebrinne, Rinne oder eine Kombination solcher Bauelemente sein. Der Flüssigkeitssammler 4 ist mittels einer Überlaufleitung 9 mit einer Pumpe 53 mit einem Flüssigkeitssammelbehälter 5 verbunden, in den die Fäkalflüssigkeit aus dem Flüssigkeitssammler 4 eingebracht wird. An den Flüssigkeitssammelbehälter 5 ist eine Entleerungsleitung 18 mit Ventil 54 und eine Überlaufleitung 9a mit Ventil 55 angeschlossen. Ferner ist eine Rohrleitung 56 zur Be- und Entlüftung vorgesehen. Der Flüssigkeitssammelbehälter 5 ist mittels einer Rohrleitung 57 mit einer Pumpe 58 und einem Ventil 59 mit einem Atomiser 60 am Eingang der Reduzierungskammer 3 verbunden. Die über den Atomiser 60 in Dampfform in die Reduzierungskammer 3 eingebrachte Flüssigkeit aus dem Flüssigkeitssammelbehälter 5 dient zur Kühlung des Innenraums der Reduzierungskammer 3. Im Feststoffsammelbereich des Sammelbehälters 6 ist eine mittels eines Motors 45 angetriebene Förderschnecke 40 angeordnet, die sich über eine Rohrleitung 41 zum Guteingang der Reduzierungskammer 3 erstreckt. Die Förderschnecke 40 kann als Verdichterschnecke, Trogschnecke, Zerkleinerungsschnecke oder Entwässerungsschnecke ausgebildet sein. Statt einer Förderschnecke 40 kann auch eine Kolbenanordnung verwendet werden, die aus einem Einzelkolben, Doppelkolben, Drehkolben oder Dosierkolben bestehen kann. Die Reduzierungskammer 3 weist ein geschirmtes Gehäuse auf, das den eigentlichen Reduzierungsraum 37 umgibt und für elektromagnetische Wellen undurchlässig ist. Zum Innenraum weist das Gehäuse einen Fensterfesteinsatz auf, der als Isolierung 36 ausgebildet ist. An dem Gehäuse ist der Sender 13 für elektromagnetische Resonanzfrequenz-Wellen angeordnet, der auf die Resonanzfrequenz der zu reduzierenden Stoffe abgestimmt ist. Ferner ist ein nicht näher dargestellter Frequenzmodulator 35 vorhanden, der mit dem Sender 13 in Wirkverbindung steht. Der Sender 13 kann ein Monolinearfenster aufweisen und ist dadurch vom Wellenleiter getrennt. Die Geometrie des Monolinearfensters ist fokussierend gestaltet. Die Geometrie des Reduzierungsraums 37 der Reduzierungskammer 3 ist fokussierend/reflektierend ausgestattet. In dem Reduzierungsraum 37 wird das aus dem Sammelbehälter 6 eingebrachte Fäkalgut zunächst getrocknet, dann verkokt und danach einer Plasmaverdampfung unterworfen. Entstehendes Abgas wird über eine Rohrleitung 66 abgeführt, in der ein Ventilator 42 und ein Filter 43 und/oder ein Katalysator angeordnet ist. Am Boden des Reduzierungsraumes 37 ist ein Feintrenner 38 angeordnet, durch den eine endgültige Trennung von ascheförmigen Feststoffbestandteilen und Restflüssigkeit erfolgt. Die Restflüssigkeit wird über eine Rohrleitung 44 in den Flüssigkeitsbehälter 5 eingebracht. Die staubförmigen Feststoffbestandteile können entweder über eine Rohrleitung 61 mit Ventil 62 direkt abgesaugt oder über eine Rohrleitung 63 in den Sammelbehälter 6 mit Papiertütenspender 8 eingebracht und hier in Papiertüten verpackt werden. Überflüssige oder nicht in Papiertüten verpackbare staubförmige Feststoffbestandteile werden über eine Rohrleitung 64 mit Ventil 65 und Vakuumpumpe 16 abgeführt.

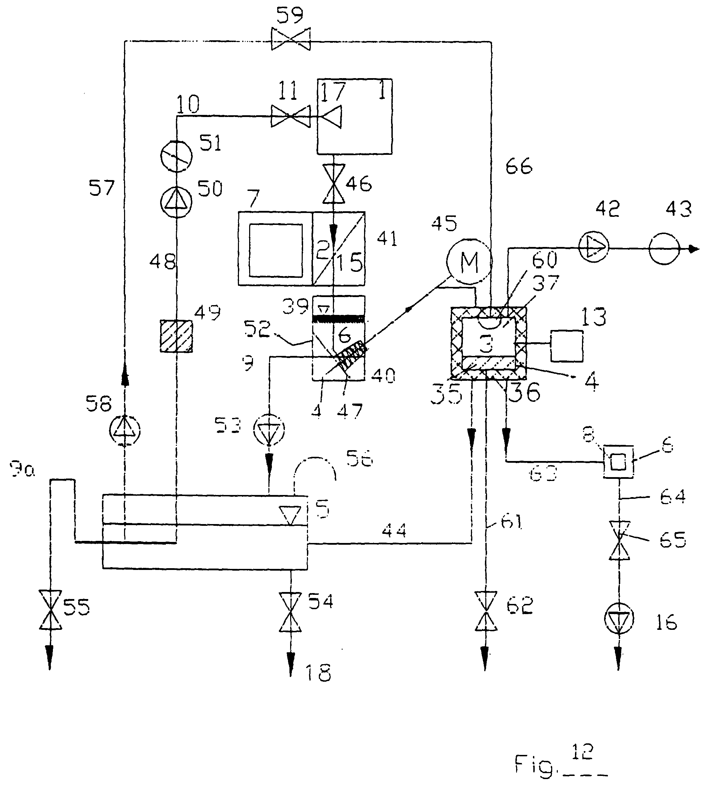

Die Toilettenanlage 30 (Fig. 12) entspricht der Toilettenanlage 29 mit dem Unterschied, daß die Rohrleitung 48 nicht an den Sammelbehälter 6, sondern an den Flüssigkeitssammelbehälter 5 angeschlossen ist.

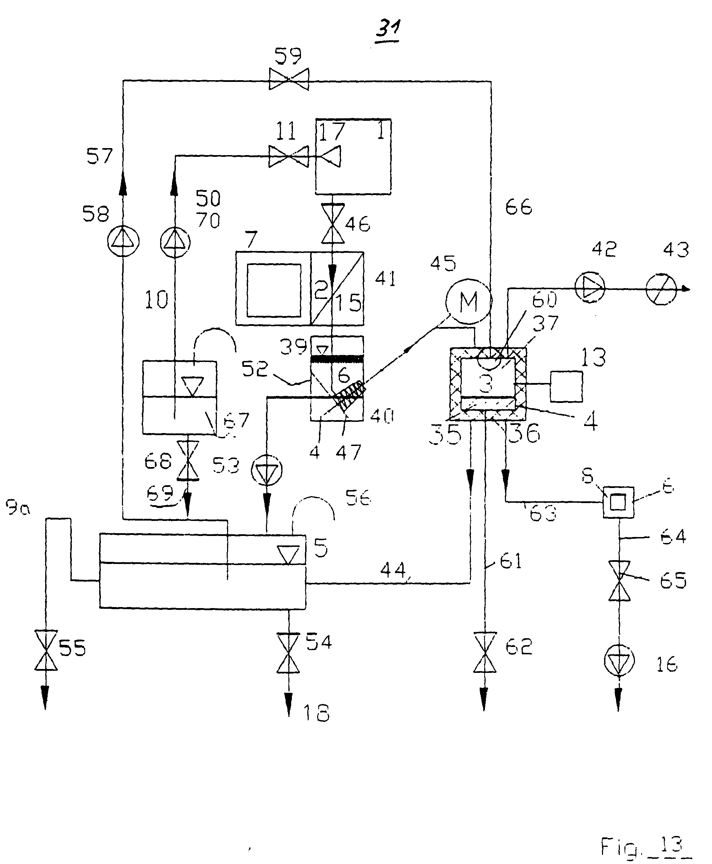

Bei der Toilettenanlage 31 nach Fig. 13 ist die Druckwasserleitung 10 im Gegensatz zu der Toilettenanlage 30 mit einem Tank 67 mit Entlüftungsleitung 71 verbunden, der über eine Rohrleitung 69 mit einem Ventil 68 oder aber auch direkt mit dem Flüssigkeitssammelbehälter 5 verbunden sein kann. Darüber hinaus entspricht die Toilettenanlage 31 der Toilettenanlage 30.

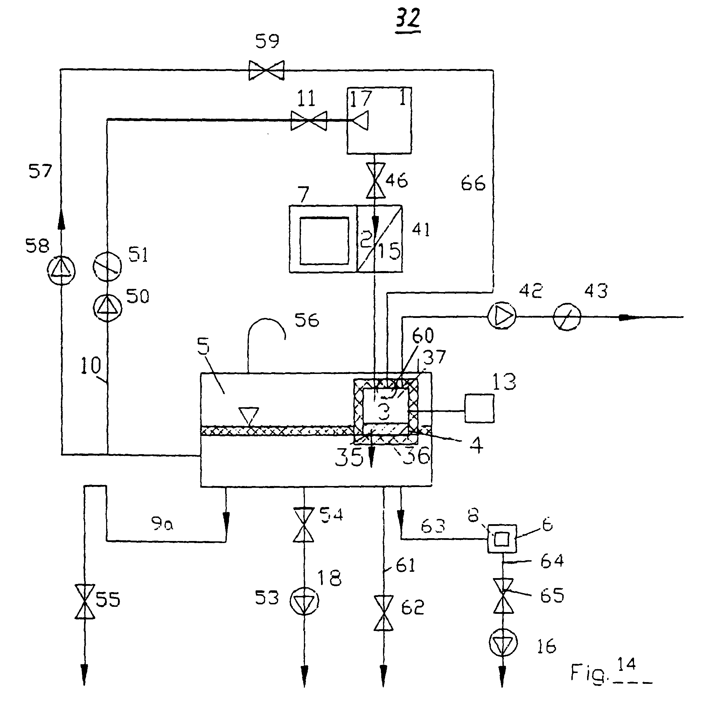

Bei der Toilettenanlage 32 gemäß Fig. 14 ist die Reduzierungskammer 3 in den Flüssigkeitssammelbehälter 5 integriert. Die weiteren Funktionen sind wie oben beschrieben.

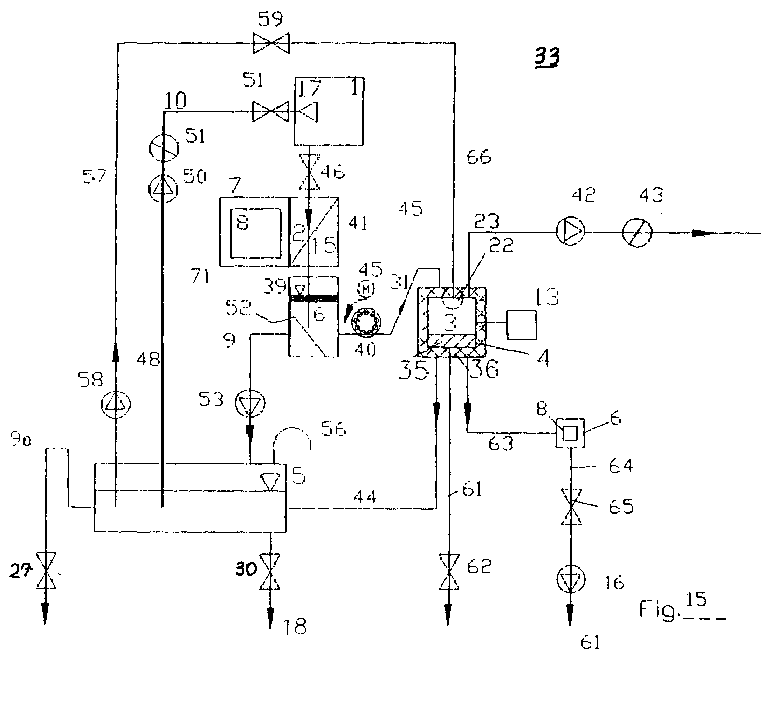

Fig. 15 zeigt eine weitere Toilettenanlage 33, bei der die Förderschnecke 40 als Rollenschlauchförderer ausgebildet ist.

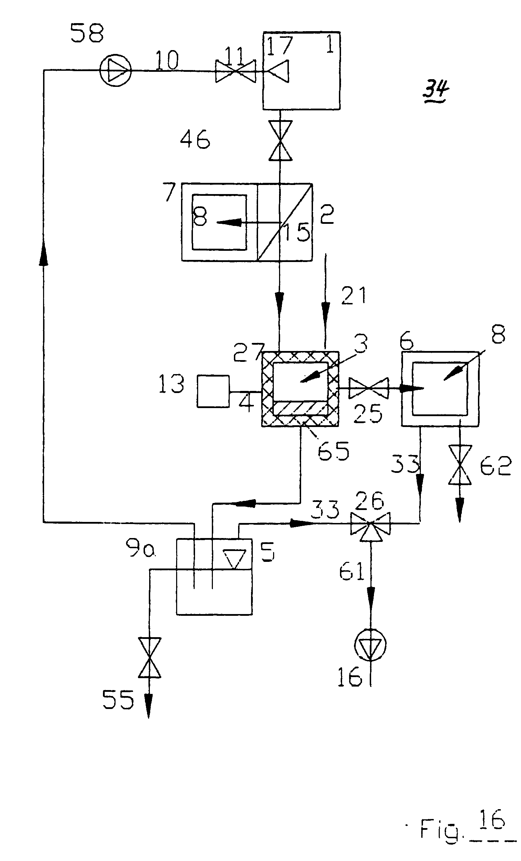

Fig. 16 zeigt eine Detailausführung einer Toilettenanlage 34 aus Komponenten der vorab beschriebenen Toilettenanlagen.

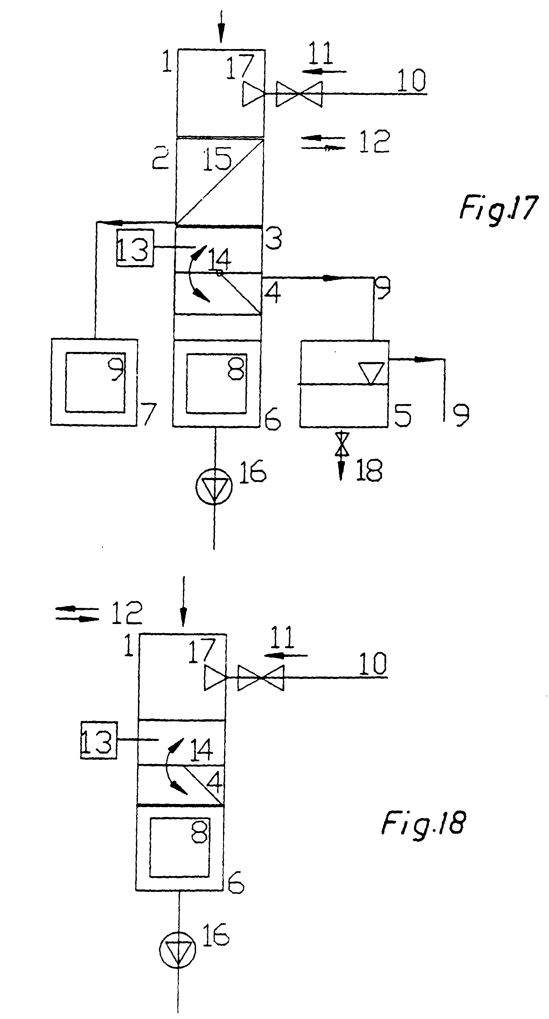

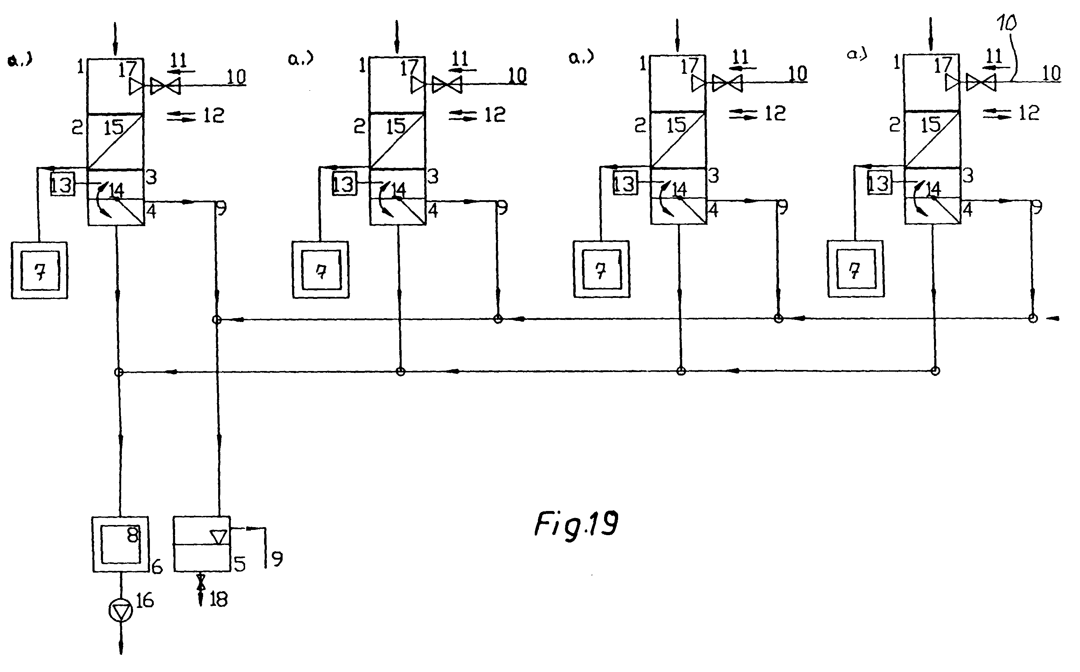

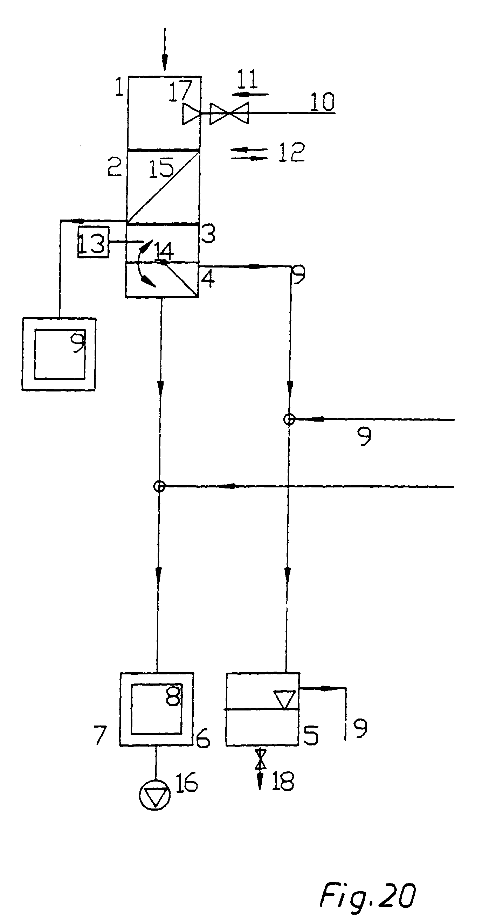

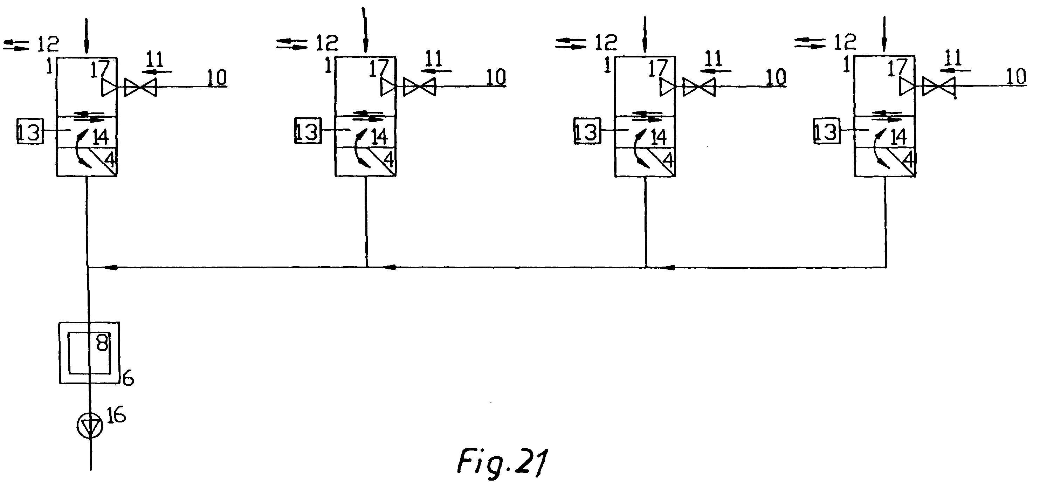

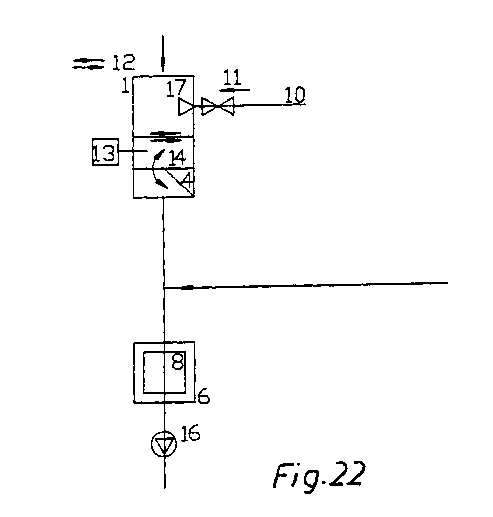

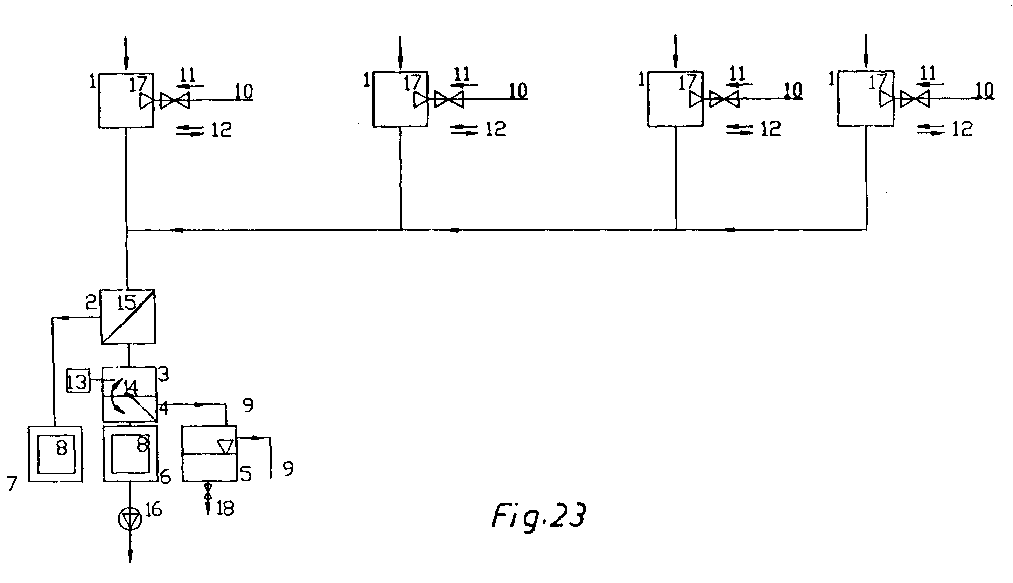

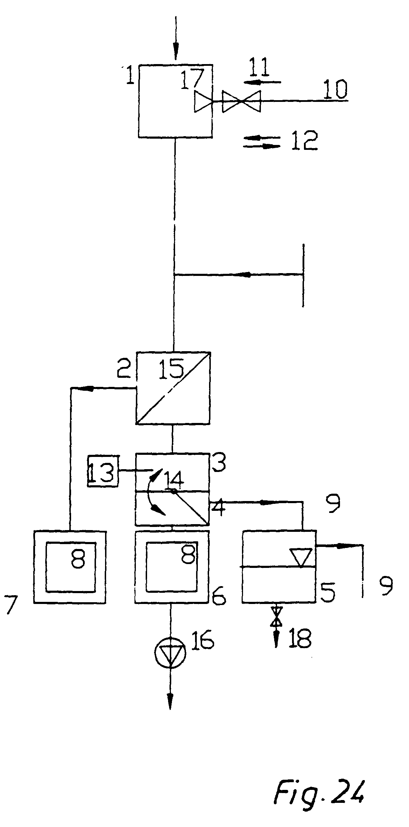

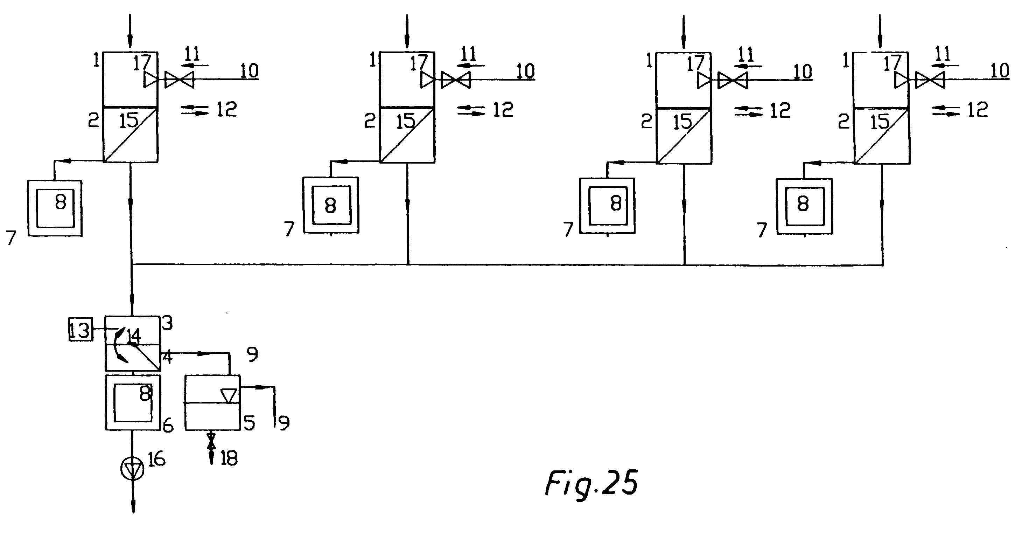

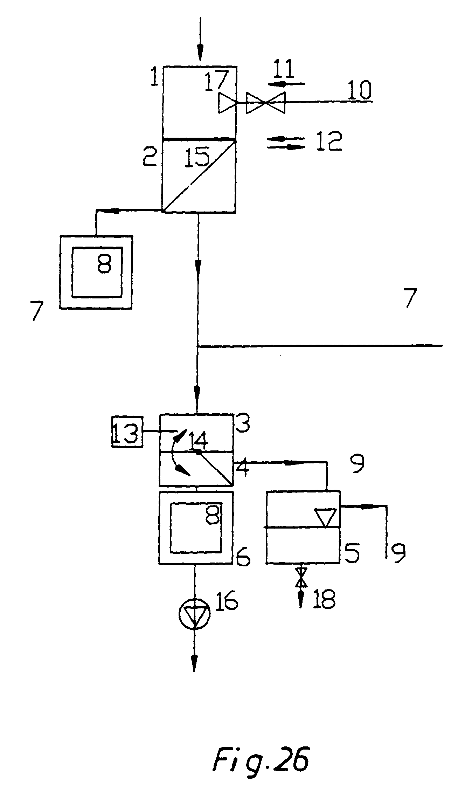

Fig. 17 bis Fig. 26 zeigen weitere Ausführungen der erfindungsgemäßen Vorrichtung.

## Patentansprüche

1. Vorrichtung zur Aufbereitung von ggf. auch kontaminierten in Sanitäranlagen am Ablauf von Toilettenbecken (1) anfallenden Schlämmen, bei der die Feststoffe mittels eines Filters aufgefangen und in einer Reduzierungskammer (3) mit Einrichtungen zur Erzeugung elektromagnetischer Wellen durch diese aufbereitet werden und die verbleibende Flüssigkeit desinfiziert wird, **dadurch gekennzeichnet, daß** die Reduzierungskammer (3) ein geschirmtes Gehäuse zur Ausbildung eines für elektromagnetische Wellen undurchlässigen Reduzierungsraums (37) aufweist, dem zur Trocknung, Verkokung und anschließender Plasmaverdampfung der Feststoffe ein Sender (13) mit einem Frequenzmodulator (35) zur Erzeugung von auf die Resonanzfrequenz der zu reduzierenden Feststoffe abgestimmten elektromagnetischen Resonanzfrequenz-Wellen zugeordnet ist.

2. Vorrichtung nach Anspruch 1, **dadurch gekennzeichnet, daß** zwischen dem Toilettenbecken (1) und der Reduzierungskammer (3) ein Grobtrennraum (2) angeordnet ist.

3. Vorrichtung nach Anspruch 1 und 2, **dadurch gekennzeichnet, daß** am Boden des Toilettenbeckens (1) eine als Schieber (12) ausgebildete siebartige Ebene angeordnet ist, die der als Energieraum ausgebildeten Reduzierungskammer (3) mit Einrichtungen zur Erzeugung elektromagnetischer Wellen zugeordnet ist, wobei bei Rückführung des Schiebers (12) auf diesem befindliche Feststoffe abgeschoben und der Schieber (12) mittels unter Druck stehendem Reinigungswasser gereinigt wird.

4. Vorrichtung nach Anspruch 3, **dadurch gekennzeichnet, daß** das Reinigungswasser nach Abtrennen und Entkeimung wieder der Reinigungsdüse (17) des Toilettenbeckens (1) zuführbar ist.

5. Vorrichtung nach Anspruch 2, **dadurch gekennzeichnet, daß** der Ablauf des Toilettenbeckens (1) mit einem Grobtrennraum (2) mit einem Grobsieb (15) verbunden ist, der mittels einer Überlaufleitung (9b) mit einem Sammelraum (7) für Glas, Dosen u.dgl. verbunden ist.

6. Vorrichtung nach Anspruch 1, **dadurch gekennzeichnet, daß** der Reduzierungskammer (3) ein Flüssigkeitssammler (4) nachgeordnet ist, der mittels einer Überlaufleitung (9) mit einem Flüssigkeitssammelbehälter (5) verbunden ist.

7. Vorrichtung nach Anspruch 1, **dadurch gekennzeichnet, daß** der Reduzierungskammer (3) ein Sammelbehälter (6) für Trockensubstanz nachgeordnet ist, der mit einer Vakuumpumpe (16) verbunden ist.

8. Vorrichtung nach Anspruch 7, **dadurch gekennzeichnet, daß** dem Sammelbehälter (6) ein Papiertütenspender (8) zur Ausgabe von Papiertüten zur Aufnahme von Trockensubstanz zugeordnet ist.

## Claims

1. Device for treating sludge, including potentially contaminated sludge, arising in sanitary systems at the outlet of a toilet bowl (1), wherein the solids are collected by means of a filter and treated by means of electromagnetic waves in a reduction chamber (3) having equipment for generating said electromagnetic waves, and the residual liquid is disinfected, **characterised in that** the reduction chamber (3) has a shielded enclosure forming a reducing space (37) which is impervious to electromagnetic waves, to which, for drying, coking and subsequent plasma vaporization of the solids, a transmitter (13) with a frequency modulator (35) for generating electromagnetic resonance frequency waves tuned to the resonance frequency of the solids to be reduced is assigned.

2. Device as claimed in Claim 1, **characterised in that** a coarse separating chamber (2) is arranged between the toilet bowl (1) and the reduction chamber (3).

3. Device as claimed in Claims 1 and 2, **characterised in that** at the bottom of the toilet bowl (1) there is arranged a screen-like plane designed as a gate (12) which is assigned to the reduction chamber (3), which is designed as an energy space and has equipment for generating electromagnetic waves, with, on retraction of the gate (12), solids present thereon being removed and the gate (12) being cleaned by means of pressurized cleaning water.

4. Device as claimed in Claim 3, **characterised in that** the cleaning water can be recirculated to the cleaning jet (17) of the toilet bowl (1) after separation and sterilization.

5. Device as claimed in Claim 2, **characterised in that** the outlet of the toilet bowl (1) is joined to a coarse separating chamber (2) having a coarse screen (15) which is joined by means of an overflow pipe (9b) to a collecting chamber (7) for glass, cans and the like.

6. Device as claimed in Claim 1, **characterised in that** downstream of the reduction chamber (3), there is a liquid collector (4) which is joined by means of an overflow pipe (9) to a liquid collecting tank (5).

7. Device as claimed in Claim 1, **characterised in that** downstream of the reduction chamber (3), there is a collecting bin (6) for dry matter which is joined to a vacuum pump (16).

8. Device as claimed in Claim 7, **characterised in that** a paper bag dispenser (8) for dispensing paper bags for receiving dry matter is assigned to the collecting bin (6).

## Revendications

1. Dispositif de traitement de boues, éventuellement contaminées, dans des installations sanitaires, à la sortie de cuvettes de W.-C. (1), dans le cas duquel les matières solides sont reprises par un filtre et sont traitées dans une chambre de broyage (3) comportant des dispositifs produisant des ondes électromagnétiques, où elles sont traitées par ces dernières, et dans le cas duquel le liquide résiduaire est désinfecté,
**caractérisé en ce que** la chambre de broyage (3) présente un boîtier avec revêtement de protection pour réaliser un espace de broyage (37) imperméable aux ondes électromagnétiques, auquel est associé, pour le séchage, la cokéfaction, puis la vaporisation par plasma des matières solides, un émetteur (13) comportant un modulateur de fréquence (35) réalisant des ondes électromécaniques de fréquence de résonance, réglées pour les matières solides à broyer.

2. Dispositif suivant la revendication 1, **caractérisé en ce qu'**entre la cuvette de W.-C. (1) et la chambre de broyage (3), est disposé un espace (2) destiné à la séparation des gros éléments.

3. Dispositif suivant la revendication 1 ou la revendication 2, **caractérisé en ce qu'**au fond de la cuvette de W.-C. (1), est disposée une surface plane formant tamis, réalisée sous la forme d'un tiroir (12), cette surface plane étant associée à la chambre de broyage (3), réalisée sous la forme d'un espace d'énergie et comportant des dispositifs produisant des ondes électromécaniques, étant entendu que, lors du retour du tiroir (12), les matières solides se trouvant sur ce dernier sont évacuées par raclage et que le tiroir (12) est nettoyé au moyen d'eau de nettoyage mise sous pression.

4. Dispositif suivant la revendication 3, **caractérisé en ce que** l'eau de nettoyage, après séparation et stérilisation, peut être renvoyée à la buse de nettoyage (17) de la cuvette de W.-C. (1).

5. Dispositif suivant la revendication 2, **caractérisé en ce que** l'évacuation de la cuvette de W.-C. (1) est reliée à une chambre de séparation des produits grossiers (2), comportant un filtre des produits grossiers (15) et reliée, par une conduite de trop-plein 9b, à une chambre de collecte (7) destinée au verre, aux boîtes, et produits similaires.

6. Dispositif suivant la revendication 1, **caractérisé en ce qu'**en aval de la chambre de broyage (3), est disposé un collecteur de liquide (4), qui est relié, au moyen d'une conduite de trop-plein (9), à un réservoir (5) de collecte des liquides.

7. Dispositif suivant la revendication 1, **caractérisé en ce qu'**après la chambre de broyage (3), est disposé un réservoir de collecte (6) pour substances sèches, lui-même relié à une pompe à vide (16).

8. Dispositif suivant la revendication 7, **caractérisé en ce qu'**au réservoir de collecte (6), est associé un distributeur de sacs en papier (8), destiné à délivrer des sacs en papier pour recevoir des substances sèches.
